(19) Europäisches Patentamt
European Patent Office
Office européen des brevets

(11) **EP 4 300 326 A1**

(12) **DEMANDE DE BREVET EUROPEEN**

(43) Date de publication:
**03.01.2024 Bulletin 2024/01**

(21) Numéro de dépôt: **23181960.8**

(22) Date de dépôt: **28.06.2023**

(51) Classification Internationale des Brevets (IPC):
**G06F 16/34** (2019.01)   **G06F 40/247** (2020.01)
**G06F 40/30** (2020.01)   **G06F 40/216** (2020.01)

(52) Classification Coopérative des Brevets (CPC):
**G06F 16/345; G06F 40/216; G06F 40/247; G06F 40/30**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **01.07.2022 FR 2206707**

(71) Demandeur: **Orange**
**92130 Issy-les-Moulineaux (FR)**

(72) Inventeur: **DAMNATI, Géraldine**
**92326 Chatillon (FR)**

(74) Mandataire: **Vidon Brevets & Stratégie**
**16B, rue de Jouanet**
**BP 90333**
**35703 Rennes Cedex 7 (FR)**

(54) **PROCÉDÉ D'APPARIEMENT D'UN ENSEMBLE À ÉVALUER ET D'UNE LISTE DE RÉFÉRENCE, MOTEUR D'APPARIEMENT ET PROGRAMME D'ORDINATEUR CORRESPONDANTS**

(57) L'invention concerne un procédé d'appariement d'un ensemble à évaluer (DOC) et d'une liste de référence (LIST), ladite liste de référence étant associée à un vecteur de référence représentatif des entrées de ladite liste (LIST_ENTR). Selon l'invention, un tel procédé d'appariement comprend :
- un calcul d'une distance (B2) entre ledit vecteur de référence et un vecteur, associé audit ensemble à évaluer, représentatif d'éléments contenus dans ledit ensemble à évaluer, lesdits éléments comprenant des chaînes de caractères et des groupes de chaînes de caractères ;
- pour chaque entrée de ladite liste de référence, un calcul (14) d'un premier score d'appariement (Score 1) dudit ensemble à évaluer et de ladite entrée de ladite liste de référence, à partir de la distance (B2) calculée entre ledit vecteur de référence et ledit vecteur associé audit ensemble à évaluer ;
- une fourniture d'une liste d'entrées de ladite liste de référence ordonnée en fonction desdits premiers scores d'appariement calculés.

[Fig 2]

**Description**

**Domaine technique**

Le domaine de l'invention est celui du traitement informatique de données. Plus précisément, l'invention concerne une technique d'appariement d'un ensemble à évaluer et d'une liste de référence, permettant de fournir des entrées de cette liste de référence les plus proches de l'ensemble à évaluer. Un tel ensemble à évaluer peut être tout type de fichier informatique ou, dans certaines applications non limitatives, de document multimédia.

**Art antérieur**

Le traitement de collections de données et de fichiers informatiques de plus en plus volumineuses nécessite de disposer de méthodes efficaces, et non ambiguës, pour effectuer des recherches en leur sein, afin de leur associer des éléments de référence représentatifs de leur contenu.

Par exemple, dans le domaine de la sécurité informatique, considérons le cas d'un fichier informatique représentatif d'un journal d'événements d'authentification sur une période donnée ; il peut être nécessaire d'identifier facilement, parmi une liste de référence contenant un ensemble de chaînes de caractères représentatives de mots de passe ou de clés cryptographiques, celles des entrées de cette liste qui sont les plus proches des mots de passes d'authentification ou de clés cryptographiques utilisées par différentes applications, dans le journal. En effet, il est ainsi possible d'identifier des formes de mots de passe ou de clés cryptographiques les plus fréquemment utilisées et donc, sur ce fondement, de proposer aux utilisateurs de nouvelles chaînes de caractères aussi différentes que possible des précédentes, pour plus de variété dans les processus d'authentification, dont la sécurité et la robustesse se trouvent ainsi accrues.

De même, dans un tout autre domaine applicatif, à savoir le domaine scientifique de l'indexation automatique pour les systèmes d'organisation de la connaissance (KOS pour l'anglais « Knowledge Organization System »), il est connu d'adopter un mode de référencement des documents qui consiste à leur attribuer un tag parmi un référentiel de tags normalisé appelé thesaurus.

Le thesaurus est conçu par des experts d'un domaine pour couvrir les différents sujets pertinents à indexer. Les documents sont indexés par un ou plusieurs termes du thesaurus et les personnes effectuant des recherches peuvent ainsi s'appuyer sur ces mêmes termes pour retrouver les documents. L'utilisation d'un thesaurus (normalisé et donc contrôlé) est préféré à l'utilisation de mots-clés libres, qui ne permettent pas de bien indexer les documents et donc de les retrouver par la suite.

L'indexation manuelle des documents pour leur attribuer des tags pertinents est une tâche difficile et coûteuse. L'indexation automatique est un champ de recherche avec des enjeux importants pour garantir une bonne indexation des documents et améliorer leur caractère trouvable.

Les approches usuelles pour cette tâche consistent, soit à effectuer une classification multi-étiquettes des documents par apprentissage supervisé, mais dans ce cas il est nécessaire de disposer d'une grande quantité de documents manuellement indexés pour l'apprentissage et l'approche est limitée dès lors que la taille du thesaurus augmente.

Des approches ont été proposées en dehors de l'apprentissage supervisé, principalement des approches de « string matching » consistant à inférer des règles en observant des documents manuellement indexés. Ces règles recherchent des combinaisons de termes dans les documents pour les associer à une entrée du thesaurus.

Des variantes approchées (« approximate matching ») cherchent à comparer de façon statistique les documents aux entrées du thesaurus et font appel à des mesures de similarité avec l'approche suivante :

1/ extraction des chaînes de caractère du document et troncature, par exemple pour passage à une racine, ou en anglais « stem » (forme indépendante des flexions, exemple « suiv » pour « suivant », « suivre », « suivi », etc...) pour apporter une généralisation ;
2/ pondération de ces chaînes de caractère tronquées en fonction de leur répartition dans les documents de la collection ;
3/ Pour chaque entrée du thesaurus, calcul d'une pondération des constituants du thesaurus avec un calcul statistique sur l'ensemble du thesaurus, pour constituer un vecteur pondéré ;
4/ Application d'une mesure cosinus sur le vecteur du document constitué par le sac de mots pondérés et le vecteur pondéré de chaque entrée du thesaurus ;
5/ Sélection des entrées du thesaurus ayant la plus grande similarité avec le document.

Ces approches de l'art antérieur présentent cependant plusieurs inconvénients, qui découlent de ce que, d'une part, elles ne considèrent que les chaînes de caractère présentes dans un document, indépendamment les unes des autres, et ne prennent pas en compte leur appartenance éventuelle à un ou plusieurs groupes de chaînes de caractères ; et de ce que, d'autre part, elles nécessitent de pondérer les chaînes de caractères présentes dans un document relativement à une collection de documents, ce qui les rend peu adaptées à la gestion d'une collection de documents évolutive et hétérogène.

Il existe donc un besoin d'une technique d'appariement d'un ensemble à évaluer et d'une liste de référence permettant de remédier à certaines des insuffisances de ces techniques antérieures.

**Exposé de l'invention**

L'invention répond à ce besoin en proposant un procédé d'appariement d'un ensemble à évaluer et d'une liste de référence, la liste de référence étant associée à un vecteur de référence représentatif des entrées de la liste. Un tel procédé d'appariement comprend :

- un calcul d'une distance (B2) entre le vecteur de référence et un vecteur, associé à l'ensemble à évaluer, représentatif d'éléments contenus dans l'ensemble à évaluer, les éléments comprenant des chaînes de caractères et des groupes de chaînes de caractères ;
- pour chaque entrée de la liste de référence, un calcul d'un premier score d'appariement (Score 1) de l'ensemble à évaluer et de l'entrée de la liste de référence, à partir de la distance calculée entre le vecteur de référence et le vecteur associé à l'ensemble à évaluer ;
- une fourniture d'une liste d'entrées de la liste de référence, ordonnée en fonction des premiers scores d'appariement calculés.

Selon un aspect, le calcul de distance comprend la détermination d'une liste de triplets comprenant au moins un triplet comprenant lui-même un desdits éléments dudit vecteur, une composante du vecteur de référence et un score de similarité entre ledit élément dudit vecteur et ladite composante.

Selon un aspect, le calcul de la liste de triplets comprend la détermination, pour chaque élément dudit vecteur associé à l'ensemble à évaluer, d'au moins un triplet.

Selon un aspect, le calcul de la liste ordonnée comprend pour un élément donné dudit vecteur associé à l'ensemble à évaluer, $n$ triplets correspondant aux $n$ composantes du vecteur de référence présentant le plus haut score de similarité avec ledit élément, avec $n$ un nombre entier naturel.

Par composante du vecteur de référence, il est entendu un élément du vecteur de référence. Cette composante peut être associée directement à l'une des entrées de la liste.

Selon un aspect, un tel procédé d'appariement comprend également, pour au moins un élément contenu dans l'ensemble à évaluer, un calcul d'un coefficient de centralité (B1) de l'élément, sous forme d'une somme de valeurs de distance entre l'élément et les autres éléments du vecteur associé à l'ensemble à évaluer, pondérées par un nombre d'occurrences des autres éléments dans l'ensemble à évaluer.

Un tel calcul de coefficient de centralité permet avantageusement d'évaluer la représentativité d'un élément vis-à-vis de l'ensemble à évaluer.

Selon un autre aspect, pour chaque entrée de la liste de référence, le premier score d'appariement (Score 1) est calculé sous forme d'une somme pondérée tenant compte de la distance calculée entre le vecteur de référence et le vecteur associé à l'ensemble à évaluer et du coefficient de centralité (B1) dudit au moins un élément.

La prise en compte de ce coefficient de centralité dans le calcul du premier score d'appariement permet avantageusement d'éviter de s'appuyer sur un élément de l'ensemble si celui-ci n'est pas représentatif de l'ensemble à évaluer, et, à l'inverse, d'augmenter le poids des éléments les plus représentatifs de l'ensemble à évaluer dans le calcul du premier score d'appariement.

Selon encore un autre aspect, un tel procédé d'appariement comprend également un calcul d'une distance (B3) entre le vecteur associé à l'ensemble à évaluer et un vecteur représentatif de constituants des entrées de la liste de référence.

Un tel calcul permet avantageusement d'éviter certaines ambiguïtés dans le cas où les entrées de la liste de référence sont des groupes de chaînes de caractères qui, lorsqu'elles sont associées, prennent une valeur différente de celle qu'elles ont lorsqu'elles sont considérées individuellement.

Selon encore un autre aspect, un tel procédé d'appariement comprend :

- pour chaque constituant des entrées de la liste de référence, un calcul d'un coefficient d'appariement du constituant, sous forme d'une somme pondérée tenant compte de la distance calculée entre le vecteur associé à l'ensemble à évaluer et le vecteur représentatif de constituants des entrées de la liste de référence, et du coefficient de centralité (B1) dudit au moins un élément ;
- pour au moins une entrée de la liste de référence, un calcul d'un second score (Score 2) d'appariement de l'ensemble à évaluer et de l'entrée de la liste de référence, à partir des coefficients d'appariement calculés pour les constituants de l'entrée.

Selon encore un autre aspect, un tel procédé d'appariement comprend encore, pour au moins certaines entrées de la liste de référence, un calcul d'un score global d'appariement par combinaison linéaire du premier et du second scores d'appariement,
et, dans la liste ordonnée d'entrées de la liste de référence, less entrées sont triées selon le score global calculé.

Selon un autre aspect, un nombre d'entrées de la liste de référence fournies dans la liste ordonnée tient compte d'un paramètre appartenant au groupe comprenant :

- un volume de l'ensemble à évaluer ;
- une valeur des scores globaux calculés pour les entrées.

L'invention concerne également un produit programme d'ordinateur comprenant des instructions de code de programme pour la mise en oeuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé d'appariement selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé précité.

L'invention concerne encore un moteur d'appariement d'un ensemble à évaluer et d'une liste de référence, la liste de référence étant associée à un vecteur de référence représentatif des entrées de la liste. Un tel moteur d'appariement comprend un processeur configuré pour exécuter :

- un calcul d'une distance (B2) entre le vecteur de référence et un vecteur, associé à l'ensemble à évaluer, représentatif d'éléments contenus dans l'ensemble à évaluer, les éléments comprenant des chaînes de caractères et des groupes de chaînes de caractères ;
- pour chaque entrée de la liste de référence, un calcul d'un premier score d'appariement (Score 1) de l'ensemble à évaluer et de l'entrée de la liste de référence, à partir de la distance calculée entre le vecteur de référence et le vecteur associé à l'ensemble à évaluer ;
- une fourniture d'une liste d'entrées de la liste de référence ordonnée en fonction des premiers scores d'appariement calculés.

Selon une caractéristique, un tel moteur d'appariement comprend une interface utilisateur et un module de restitution de la liste ordonnée d'entrées sur l'interface utilisateur.

Selon une autre caractéristique, un tel moteur d'appariement comprend une mémoire configurée pour stocker en association l'ensemble à évaluer et Q. premières entrées de la liste ordonnée présentant un premier score d'appariement supérieur à un score d'appariement déterminé, où Q est un entier naturel.

Selon encore une autre caractéristique, le processeur d'un tel moteur d'appariement est également configuré pour exécuter les étapes du procédé tel que décrit précédemment.

Le moteur d'appariement, le support de données et le programme d'ordinateur correspondants précités présentent au moins les mêmes avantages que ceux conférés par le procédé d'appariement selon la présente invention.

## Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[Fig 1] illustre sous forme d'organigramme schématique le principe général de la technique d'appariement selon un mode de réalisation de l'invention ;

[Fig 2] présente un organigramme plus détaillé des différentes étapes mises en oeuvre par le procédé d'appariement selon un mode de réalisation de l'invention ;

[Fig 3] décrit la structure matérielle d'un moteur d'appariement selon un mode de réalisation de l'invention.

Description détaillée de modes de réalisation de l'invention

Le principe général de l'invention repose sur le calcul de différentes combinaisons pondérées de distances entre un vecteur représentatif d'un ensemble de départ à évaluer et un vecteur représentatif d'une liste de référence, permettant de fournir une liste d'entrées de la liste de référence, ordonnées en fonction des résultats de ce calcul, afin d'identifier celles de ces entrées qui sont les plus pertinentes à associer à l'ensemble de départ à évaluer.

On présente désormais, en relation avec les figures, un mode de réalisation particulier de l'invention dans le contexte applicatif de l'indexation automatique ou semi-automatique de documents multimédia. L'invention n'est bien sûr pas limitée à ce type d'application qui n'est fournie ici qu'à titre d'exemple.

En effet, la technique d'appariement proposée peut notamment permettre de prédire les tags, (encore appelés étiquettes, ou labels, ou entrées d'une liste de référence) pouvant être associés à un document à partir d'une liste de tags prédéfinis, regroupés dans ce que l'on appelle un thesaurus.

Un thesaurus correspond à une liste de termes, à plat ou structuré sous forme arborescente. Les termes du thésaurus sont généralement appelés des entrées lorsque l'on fait référence à l'analyse du thesaurus et des tags lorsque l'on fait référence au résultat d'un processus d'indexation automatique ou semi-automatique. Une entrée du thésaurus (ex : « banque mobile ») peut être composée d'une à plusieurs chaînes de caractères, appelées constituants (dans cet exemple, deux constituants : « banque » et « mobile ») de l'entrée.

Un document peut être un document textuel ou un document vidéo ou audio pour lequel on dispose d'une transcription automatique ou d'un sous-titre, de sorte que le document soit associé à un contenu textuel au sein duquel il est possible d'identifier et rechercher certaines chaînes de caractères (par exemple, des mots), ou groupes de chaînes de caractères (par exemples des locutions simples ou étendues).

La prédiction des tags s'appuie sur l'analyse du contenu textuel du document, celui-ci pouvant être extrait directement dans le cas d'un document textuel natif, ou issu d'une numérisation par OCR (pour l'anglais « Optical Character Recognition », en français, « reconnaissance optique de caractère ») dans le cas d'un document numérisé ou bien encore issu d'une transcription automatique de la parole dans le cas d'un document audio ou vidéo.

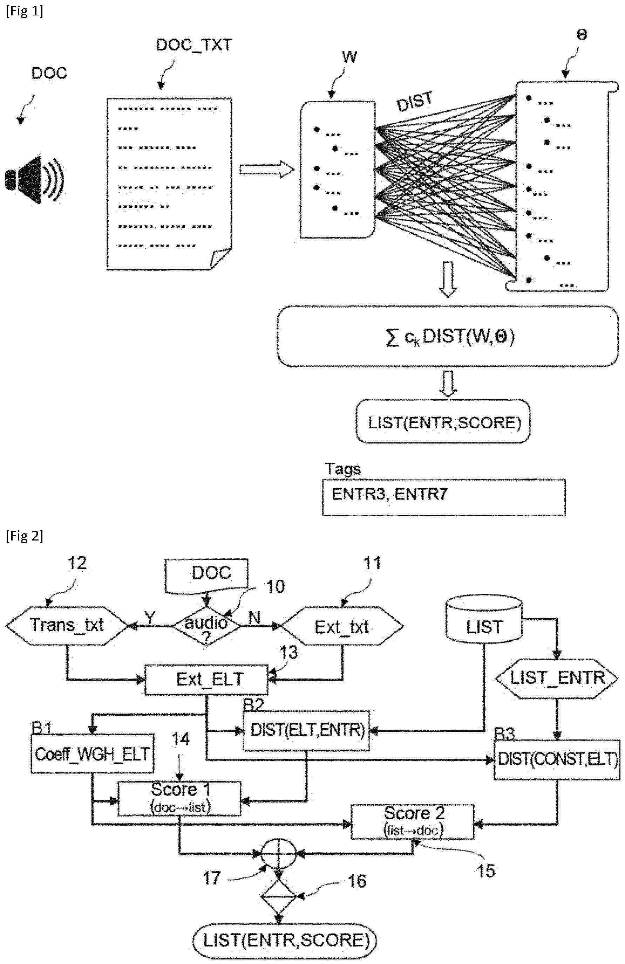

[Fig. 1] illustre sous forme d'organigramme schématique le principe général de la technique d'appariement selon un mode de réalisation de l'invention.

On suppose dans cet exemple qu'on dispose d'un fichier informatique DOC contenant notamment un fichier audio. Un tel fichier informatique peut être une vidéo extraite d'archives audiovisuelles, ou un enregistrement audio d'une conversation professionnelle ou commerciale par exemple. Par des techniques qui ne font pas l'objet de la présente invention (par exemple par transcription automatique), il est possible d'associer à ce fichier DOC son contenu textuel DOC_TXT, qui comprend une succession de chaînes de caractère, chaque caractère étant illustré par un point sur la figure 1. Par analyse syntaxique de cette succession de chaînes de caractères, selon une technique qui ne fait pas l'objet de la présente invention, mais qui est par exemple décrite dans la demande de brevet FR 3 041 125 A1 au nom du Demandeur, il est possible de :

- déterminer la catégorie syntaxique de chaque chaîne de caractères, ou mot ;
- déterminer le lemme de chaque chaîne de caractères (i.e. la forme « canonique » du mot, telle qu'on la trouve dans le dictionnaire) ;
- segmenter les groupes de chaînes de caractères en groupes syntaxiques (par exemple, groupe nominal, groupe verbal, groupe prépositionnel).

On peut ainsi extraire automatiquement du contenu textuel DOC_TXT :

- des chaînes de caractères correspondant à des mots-clés dans la forme de lemmes ;
- des groupes de chaînes de caractères correspondant à des mots-clés dans une forme de contexte immédiat, i.e. sous forme de locutions simples ;
- des groupes de chaînes de caractères correspondant à des mots-clés dans une forme de contexte étendu, i.e. sous forme de locutions étendues.

Ainsi, si dans le fichier vidéo de départ DOC, un intervenant prononce les mots « test de Livebox® en situation réelle », il est possible d'extraire de la transcription textuelle DOC_TXT associée :

- un groupe de chaînes de caractères « test de Livebox® en situation réelle », qui correspond à une locution étendue ;

- un groupe de chaînes de caractères « test de Livebox® », qui correspond à une locution simple ;
- un groupe de chaînes de caractères « situation réelle », qui correspond à une locution simple ;
- des chaînes de caractères « test », « Livebox® », « situation » et « réelle », qui correspondent chacune à un mot simple.

Ces trois niveaux (lemme, contexte immédiat, contexte étendu) permettent de mieux capturer le sens du contenu textuel DOC_TXT du fichier de départ DOC, et donc d'améliorer le résultat de l'appariement entre ce fichier de départ et la liste de référence formant le thesaurus. En effet, on comprend que, si une entrée de la liste de référence comprend le groupe de chaînes de caractères « test in vivo », l'utilisation des trois niveaux d'extraction susmentionnés permet un meilleur appariement du fichier DOC avec cette entrée du thesaurus, par rapport à une extraction qui ne permettrait d'extraire que des mots simples ou lemmes du document.

On notera cependant que l'utilisation de cette méthode d'extraction décrite dans la demande antérieure FR 3 041 125 A1 ne constitue qu'un exemple de réalisation possible, mais non limitatif. C'est à partir de ces informations que les mots clés sont sélectionnés avec leurs contextes immédiats et étendus, sur la base de règles sur les catégories et les groupes syntaxiques. L'utilisation de cette méthode permet de s'abstraire de l'utilisation d'un dictionnaire *a priori* de mots clés, un dictionnaire *a priori* ne pouvant pas couvrir l'ensemble des contextes présents dans les documents (ex : déterminisme génétique), et encore moins les contextes étendus (problème sur le déterminisme génétique).

Ainsi, l'extraction automatique d'éléments contenus dans le fichier DOC_TXT de départ, pour les trois niveaux proposés, nécessite l'enchaînement des étapes suivantes :

- application de règles de regroupements des chaînes de caractères ;
- sélection ;
- détermination de la forme de surface.

On ne décrira pas ici plus en détail ces étapes, mais le lecteur pourra se référer si nécessaire à la demande antérieure FR 3 041 125 A1.

On suppose donc qu'à partir de cette méthode d'extraction automatique, ou de toute autre méthode d'extraction adaptée, on a identifié un ensemble d'éléments contenus dans le document DOC_TXT, à savoir des chaînes de caractères et des groupes de chaînes de caractères. On adopte une représentation vectorielle W de l'ensemble de ces éléments contenus dans le fichier DOC_TXT et représentatifs de son contenu.

On adopte également une représentation vectorielle $\Theta$ de l'ensemble des entrées d'une liste de référence, ou thesaurus, que l'on veut apparier avec le fichier de départ DOC.

La technique d'appariement selon un mode de réalisation de l'invention repose sur le calcul de différentes valeurs de distances DIST entre les vecteurs W représentatif du fichier de départ DOC et $\Theta$ représentatif des entrées de la liste de référence, et plus précisément sur le calcul de différentes valeurs de distance DIST entre chacun des éléments constitutifs du vecteur W d'une part, et le vecteur $\Theta$ d'autre part, entre chacune des entrées constitutives du vecteur $\Theta$ d'une part, et le vecteur W d'autre part, mais également entre chacun des éléments constitutifs du vecteur W et le vecteur W lui-même.

Comme représenté schématiquement sur la figure 1, ces différentes distances calculées sont combinées sous forme de somme pondérée ($\Sigma c_k DIST(W, \Theta)$), qui permet de déduire un score d'appariement associé à chacune des entrées du vecteur $\Theta$, représentatif de sa pertinence vis-à-vis du contenu textuel du fichier de départ DOC.

Ces entrées peuvent ainsi être triées à partir de leur score d'appariement, et fournies sous forme d'une liste ordonnée LIST(ENTR, SCORE). En sélectionnant les entrées les plus pertinentes au sein de cette liste ordonnée, il est possible d'en déduire les tags du thesaurus à apparier au fichier informatique de départ DOC (par exemple, les entrées ENTR3 et ENTR7 du thesaurus).

[Fig. 2] présente un organigramme plus détaillé des différentes étapes mises en oeuvre par le procédé d'appariement selon un mode de réalisation de l'invention.

On considère dans cet exemple que l'on dispose d'un ensemble de départ à évaluer, noté DOC, qui peut être tout type de fichier informatique, et notamment un document multimédia. On dispose également d'une liste de référence, à plat ou arborescente, que l'on note LIST, par exemple un thesaurus comprenant un ensemble d'entrées.

Au cours d'une première étape référencée 10, on évalue la nature du fichier de départ DOC, pour savoir s'il a un contenu textuel que l'on peut extraire (Ext_txt 11), ou s'il est nécessaire de procéder à une transcription d'un contenu audio en contenu textuel (Trans_txt 12). A partir de ce contenu textuel, on peut, au cours d'une étape référencée 13, extraire des éléments contenus dans le fichier de départ DOC, sous forme de chaînes de caractères ou de groupes de chaînes de caractères, comme décrit ci-avant en relation avec la figure 1.

On adopte de préférence une représentation vectorielle de ces éléments, par exemple sous la forme du vecteur W de la figure 1, qui permet à ce procédé d'appariement de s'appuyer sur une notion de similarité sémantique permettant de comparer des mots ou expressions entre elles (par exemple la mesure de similarité Simbow (décrite par Charlet D.,

& Damnati G. (2017, August) dans l'article « Simbow at semeval-2017 task 3: Soft-cosine semantic similarity between questions for community question answering", Proceedings of the 11th International Workshop on Semantic Evaluation (SemEval-2017) (pp. 315-319)) ou une mesure cosinus à partir d'encastrements (en anglais « embeddings ») de séquences (décrite par Reimers, Nils, et Iryna Gurevych dan l'article "Sentence-BERT: Sentence Embeddings using Siamese BERT-Networks", *Proceedings of the 2019*

*Conférence on Empirical Methods in Natural Language Processing and the 9th International Joint Conference on Natural Language Processing (EMNLP-IJCNLP),* 2019).

Comme illustré par la figure 2, le recours à cette mesure de similarité est utilisé à trois niveaux :

- au niveau référencé B1, pour calculer une pondération des éléments représentatifs du document DOC sous la forme d'un score de « centralité » COEFF_WGH_ELT ;
- au niveau référencé B2, pour calculer la similarité sémantique DIST(ELT, ENTR) entre les éléments ELT représentatifs du document DOC et les entrées ENTR du thesaurus LIST ;
- au niveau référencé B3, pour calculer la similarité sémantique DIST(CONST,ELT) entre les constituants CONST des entrées ENTR du thesaurus et les éléments ELT représentatifs du document DOC.

On décrit ci-après la notion générale de similarité sémantique, sur laquelle repose le procédé d'appariement illustré par la figure 2.

Soient X et Y deux ensembles, Y représentant une collection de référence parmi laquelle on va rechercher des éléments similaires et X représentant une requête.

On recherche, parmi les éléments de Y, des éléments similaires aux éléments de X.

Sim(X ---> Y) permet d'obtenir pour chaque élément de X, la liste ordonnée des éléments de Y les plus similaires.

Supposons, selon un mode de réalisation, pour des raisons d'efficacité, que l'on ne conserve que les *max* plus proches voisins au maximum (similarité considérée comme nulle au-delà).

Dans ce cas, on peut considérer que l'appel à une technologie de similarité sémantique produit un ensemble de triplets $(x_i, y_j, \sigma^Y(x_i, y_j))$ (où $\sigma^Y(x_i, y_j)$ est la valeur de la similarité sémantique entre $x_i$ et $y_j$) telle que :

$$\text{Sim}(X \to Y) = \left\{ \left( x_i, y_{\pi(Y;x_i;n)}, \sigma^Y(x_i, y_{\pi(Y;x_i;n)}) \right), 1 \le i \le |X|, 1 \le n \le max \right\}$$

Avec $\pi(Y; x_i; n)$ l'indice du n-ième plus proche voisin de $x_i$ parmi les éléments de Y. Cette similarité sémantique peut par exemple s'exprimer sous la forme :

$$cos_M(X, Y) = \frac{X^t.M.Y}{\sqrt{X^t.M.X}.\sqrt{Y^t.M.Y}}$$

Avec $X^t.M.Y = \sum_{i=1}^{n} \sum_{j=1}^{n} x_i m_{i,j} y_j$ où M est une matrice dont l'élément $m_{i,j}$ exprime une relation sémantique entre le mot *i* et le mot *j* (par exemple, les mots *i* et *j* sont synonymes, ou apparaissent dans des contextes similaires si on observe de gros volumes de textes, etc.).

La technique d'appariement revendiquée est donc avantageuse en ce que, grâce à cette approche fondée sur un calcul de distance de similarité sémantique, elle est capable de proposer l'entrée du thesaurus « véhicule » si le document à évaluer parle de « voiture » ou de « camion » sans jamais employer le terme « véhicule ».

Ainsi, dans le mode de réalisation de la figure 2, on suppose que le vecteur W représentatif des N éléments contenus dans le fichier de départ DOC s'écrit sous la forme :

$$W = \{w_1, ..., w_i, ..., w_N\}.$$

Ce vecteur W contient l'ensemble des mots clés $w_i$ du document, obtenus par exemple selon le procédé décrit dans la demande de brevet antérieure FR 3 041 125 A1. Chaque élément $w_i$ peut être une chaîne de caractères (i.e. un mot simple (par exemple « ressource »)), ou un groupe de chaînes de caractères (i.e. une locution simple (par exemple « ressource cachée ») ou une locution étendue (par exemple « ressource cachée dans la maison »). Chaque élément $w_i$ est associé à son nombre d'occurrences $occ(w_i)$ dans le document DOC.

Dans un mode de réalisation simplifié de l'invention, on se contente d'évaluer la similarité sémantique au niveau B2, à l'exception des niveaux B1 et B3.

En reprenant les notations ci-dessus, le calcul de distance DIST(ELT, ENTR) entre les éléments ELT représentatifs du document DOC et les entrées ENTR du thesaurus LIST s'écrit sous la forme Sim(W → Θ), et permet d'évaluer la similarité sémantique des mots clés du document vis-à-vis des entrées du thesaurus, par calcul d'une distance entre chaque élément $w_i$ du vecteur W et le vecteur Θ.

Supposons que l'on ne conserve que les 100 plus proches voisins au maximum (similarité considérée comme nulle au-delà). Ce calcul de distance produit alors un ensemble de triplets $(w_t, \theta_j, \sigma^{\Theta}(w_i, \theta_j))$ tels que :

$$\mathrm{Sim}(W \rightarrow \Theta) = \left\{ \left( w_i, \theta_{\pi(\Theta; w_i; n)}, \sigma^{\Theta}(w_i, \theta_{\pi(\Theta; w_i; n)}) \right), 1 \leq i \leq |W|, 1 \leq n \leq \min(100, \nu(\Theta; w)) \right\}$$

Avec $\nu(\Theta; w_i)$ le nombre de voisins de $w_i$ parmi les éléments de Θ et $\pi(\Theta; w_i; n)$ l'indice du n[ième] plus proche voisin de w parmi les éléments de Θ.

Pour chaque entrée ENTR du thesaurus LIST, on peut alors calculer un score d'appariement (étape référencée 14), noté *Score 1*, représentant la similarité des éléments ELT du fichier de départ DOC à l'entrée $\theta_j$ du thésaurus considérée, sous la forme :

$$\rho_1(\theta_j) = \sum_{i=1, |W|} \sigma^{\Theta}(w_i, \theta_j)$$

Lors d'une étape référencée 16, les entrées $\theta_j$ du thésaurus sont triées, par exemple par ordre décroissant du score *Score 1*, $\rho_1(\theta_j)$, et ordonnées en conséquence dans une liste LIST(ENTR,SCORE).

Selon un premier mode de réalisation, cette liste ordonnée peut être affichée sur une interface utilisateur, pour aider ce dernier dans le choix des tags du thésaurus les plus pertinents pour indexer le fichier de départ DOC. L'utilisateur peut alors valider ou non les choix qui lui sont proposés sur l'interface utilisateur.

Selon un autre mode de réalisation, l'indexation du fichier de départ DOC est entièrement automatisée : par exemple on fixe un seuil de pertinence pour le score, et on ne conserve, pour indexer le fichier de départ, que les entrées du thesaurus dont le score *Score 1* est supérieur au seuil de pertinence déterminé. Selon une autre approche, on détermine le nombre de tags en fonction du volume du fichier de départ (par exemple, en fonction de la durée d'une vidéo, on propose plusieurs paliers d'indexation respectivement associés à un nombre de tags à sélectionner dans la liste ordonnée), et on conserve le nombre de tags déterminé, en parcourant la liste ordonnée par ordre de score décroissant.

L'utilisation du seul calcul de distance B2 présente déjà de nombreux avantages par rapport aux techniques antérieures, et notamment par rapport à la technique décrite dans l'article de Boukhari K., & Omri M. N. (2020), "Approximate matching-based unsupervised document indexing approach: application to biomedical domain", Scientometrics, 124(2), 903-924.

En effet, cette technique antérieure de correspondance approximative cherche à comparer de façon statistique les documents aux entrées du thesaurus et fait appel à des mesures de similarité avec l'approche suivante :

1/ extraction des mots du document et passage à la racine (en anglais, « stem », i.e. une forme indépendante des flexions, exemple « suiv » pour « suivant », « suivre », « suivi », etc...) pour apporter une généralisation ;
2/ pondération de ces racines en fonction de leur répartition dans les documents d'une plus vaste collection de documents ;
3/ Pour chaque entrée du thesaurus, calcul d'une pondération des constituants du thesaurus avec un calcul statistique sur l'ensemble du thesaurus, pour constituer un vecteur pondéré ;
4/ Application d'une mesure cosinus sur le vecteur du document constitué par le sac de mots pondérés et le vecteur pondéré de chaque entrée du thesaurus ;
5/ Sélection des entrées du thesaurus ayant la plus grande similarité avec le document.

Ainsi, cette technique antérieure présente différentes limites : elle est basée sur la similarité cosinus, seules des entrées du thesaurus dont les mots constituants ou leurs racines se trouvaient explicitement dans le document pouvant être sélectionnées.

Or il est souhaitable d'avoir une méthode statistique capable de proposer l'entrée du thesaurus « véhicule » si le document parle de « voiture » ou de « camion » sans jamais employer le terme « véhicule ».

Les techniques de similarité sémantique mises en oeuvre dans la technique d'appariement revendiquée, qui sont basées sur des représentations vectorielles (« embeddings » en anglais) de chaînes de caractères ou de groupes de chaînes de caractères permettent d'envisager cela.

Ainsi, l'utilisation lors de l'étape B2 de la figure 2 d'une mesure de similarité sémantique permet de généraliser mieux que la simple racinisation (en anglais « stemming ») des mots.

Par ailleurs, cette approche antérieure ne considère que les mots du document indépendamment les uns des autres. Au contraire, l'étape de calcul B2 de la figure 2 repose sur le vecteur W contenant tous les éléments pertinents du document DOC, à savoir aussi bien des chaînes de caractères (mots simples) que des groupes de chaînes de caractères (locutions, i.e. mots clés en contexte) ce qui permet de s'appuyer sur des expressions plus pertinentes dans le document. Cependant, dans un mode de réalisation plus complet de la technique d'appariement revendiquée, on procède à l'ensemble des étapes et calculs représentés schématiquement sur la figure 2, pour un résultat d'indexation amélioré.

Ainsi, lors d'une étape B1, on procède à un calcul de distance entre chaque élément $w_i$ du fichier de départ DOC et l'ensemble des autres éléments de ce fichier, soit Sim(W ---> W), qui permet d'évaluer la similarité sémantique des mots clés du document entre eux.

On peut ainsi calculer un coefficient de « centralité » de chaque élément $w_i$ : en effet, plus un élément (ou mot clé) est similaire aux autres éléments du document, plus il est central, i.e. plus il reflète le sujet du document DOC.

Le calcul de ce coefficient de pondération reflétant la « centralité » des mots du document est noté Coeff_WGH_ELT sur la figure 2. Pour l'élément $w_i$, il se note :

$$\gamma(w_i) = \sum_{n=1,max} occ(w_{\pi(W;w_i;n)})\sigma^W\big(w_i, w_{\pi(W;w_i;n)}\big)$$

$\gamma(w_i)$ est la somme des similarités sémantiques entre le mot clé $w_i$ et les autres mots clés du document, pondérée par le nombre d'occurrences $occ$ de chacun de ces mots clés.

L'étape référencée 14 de calcul du premier score d'appariement *Score 1* peut avantageusement tenir compte de ce coefficient de centralité calculé lors de l'étape B1.

Pour chaque entrée du thesaurus $\theta_j$, ce premier score d'appariement *Score 1*, également noté $\rho_1(\theta_j)$, s'exprime comme la somme pondérée, sur tous les mots clés du document, de la similarité des éléments $w_i$ du document DOC à l'entrée $\theta_j$ du thesaurus, pondérée par la centralité $\gamma(w_i)$ du mot clé. Dans une variante de réalisation, il s'exprime sous la forme suivante :

$$\rho_1\big(\theta_j\big)= \sum_{i=1,|W|} \sigma^\Theta\big(w_i, \theta_j\big)^2 \sqrt{\gamma(w_i)}$$

Dans cette variante, pour une entrée du thesaurus $\theta_j$, $\rho_1(\theta_j)$ est la somme, sur tous les mots clés du document, de la similarité entre les mots clés et l'entrée du thésaurus, élevée au carré, pondérée par la racine carrée du coefficient de centralité des mots clés.

En effet, cette variante permet de renforcer l'importance des éléments $w_i$ ayant une similarité $\sigma^\Theta(w_i, \theta_j)$ à l'entrée du thésaurus $\theta_j$ proche de 1, et donc de les prendre davantage en compte. On pourrait bien sûr envisager de les élever à une puissance L supérieure à 2, pour renforcer encore cet effet d'accentuation, par exemple :

$$\rho_1\big(\theta_j\big)= \sum_{i=1,|W|} \sigma^\Theta\big(w_i, \theta_j\big)^L \sqrt[L]{\gamma(w_i)}$$

Ainsi, la technique d'appariement revendiquée propose, contrairement aux techniques de l'art antérieur (et notamment à la technique de correspondance approximative susmentionnée de Boukhari et al.), une approche indépendante de la collection de documents, et repose au contraire sur une pondération des termes vis-à-vis du document uniquement, ce qui permet de gérer plus facilement une collection évolutive ou hétérogène.

La prise en compte d'un tel coefficient de centralité permet avantageusement de résoudre un problème fréquemment rencontré dans un processus d'indexation automatique de document, qui consiste à s'appuyer sur un mot du document qui n'est pas suffisamment représentatif de son contenu.

Par exemple, dans une vidéo qui décrit le processus de développement d'une passerelle résidentielle dans les laboratoires du Demandeur, si la personne dit « nous avons des ressources cachées dans la maison », le mot « maison » est employé dans une expression idiomatique pour exprimer l'entreprise du Demandeur au sens large : il serait donc un contre-sens de proposer un tag sur la « maison connectée » par exemple. La prise en compte du coefficient de centralité lors de l'étape de calcul B1 permet d'éviter ce type de contre-sens.

En outre, le calcul de similarité sémantique est également utilisé au niveau B3, pour mesurer la distance DIST(CONST,ELT) entre les constituants CONST des entrées ENTR du thesaurus et les éléments ELT représentatifs du document DOC.

Soit $\Theta = \{\theta_1, ..., \theta_j, ..., \theta_M\}$, le thesaurus constitué de M entrées ENTR.

Soit $C = \{c_1, ..., c_k, ..., c_P\}$, l'ensemble des constituants des entrées du thesaurus : un constituant est une chaîne de caractères, i.e. un mot simple (par exemple « banque » et « mobile » pour l'entrée « banque mobile »), quand une entrée peut être un groupe de chaînes de caractères.

Le calcul de distance, lors de l'étape B3, entre le vecteur C des constituants des entrées du thesaurus et le vecteur W des éléments du document DOC, permet de calculer, pour chaque constituant $c_k$ du thesaurus, un coefficient $\beta(c_k)$, qui est la somme des similarités entre ce constituant et les mots clés du document pondérée par le coefficient de centralité des mots clés du document.

Dans une variante de réalisation, ce coefficient $\beta(c_k)$ s'exprime sous la forme :

$$\beta(c_k) = \sum_{n=1,max} \sigma^W\big(c_k, w_{\pi(W;c_k;n)}\big)^2 \sqrt{\gamma\big(w_{\pi(W;c_k;n)}\big)}$$

Où les similarités $\sigma^W$ sont élevées au carré, et les coefficients de centralité remplacés par leurs racines carrées, pour accentuer l'importance des similarités proches de 1.

On en déduit alors un second score d'appariement, noté *Score 2,* pour une entrée du thesaurus $\theta_j$ constituée de $v(\theta_j)$ constituants $\theta_j = \{c_l, 1 \le l \le v(\theta_j)\}$

$$\rho_2\big(\theta_j\big) = \left(\prod_{l=1,v(\theta_j)} \beta(e_l)\right)^{1/v(\theta_j)}$$

Ainsi, pour une entrée du thesaurus $\theta_j$=« banque mobile», $v(\theta_j) = 2$, $e_1$= « banque » et $e_2$= « mobile » et on a :

$$\rho_2(\text{banque mobile}) = \big(\beta(\text{banque})\beta(\text{mobile})\big)^{1/2}$$

Un tel calcul B3 permet d'éviter de proposer un tag spécifique si son sens est différent du sens général ; par exemple, une des difficultés rencontrées dans un tel processus d'indexation automatique est qu'il ne faut pas proposer le tag « Réseau social » pour un document qui parle du réseau au sens large. De même, il ne faut pas proposer le tag « Banque mobile » pour un document qui parle des téléphones mobiles. Le calcul B3 permet avantageusement de lever ce type d'ambigüités.

Lors d'une étape référencée 17, on peut alors calculer un score global d'appariement à partir du premier et du second scores d'appariement (*Score* 1, ou $\rho_1(\theta_j)$, et *Score 2,* ou $\rho_2(\theta_j)$), par exemple par combinaison linéaire de ces deux scores :

$$\rho\big(\theta_j\big) = \lambda\rho_1\big(\theta_j\big) + (1 - \lambda)\rho_2\big(\theta_j\big)$$

Le procédé d'appariement permet de produire pour chaque document DOC une liste de tags $\theta_j$ issus du thesaurus LIST, triée selon le score final $\rho(\theta_j)$. Le nombre de tags $\theta_j$ retenus peut être ajusté en fonction des scores $\rho(\theta_j)$ et de la longueur du document DOC (ou de sa durée dans le cas d'une vidéo ou d'un document audio).

La technique d'appariement décrite ci-avant peut avantageusement s'appliquer à l'indexation automatique de document, ou comme aide à l'indexation en suggérant des entrées du thesaurus sur une interface IHM qu'un utilisateur peut valider ou invalider. Elle trouve une application avantageuse à l'indexation d'archives audiovisuelles.

La notion d'indexation peut s'appliquer également dans des contextes applicatifs en lien avec la Relation Client, comme l'analyse de conversations clients-téléconseiller (en anglais « Speech Analytics ») où la technique peut être utilisée pour « tagger » des conversations à partir d'un thesaurus mis au point par des experts métiers. En effet, un thesaurus est défini par les métiers comme une liste des sujets pouvant être abordés dans les conversations, et l'analyse du contenu permet de prédire ces sujets comme des tags et ainsi de faciliter l'indexation des conversations et leur analyse par regroupement des sujets abordés.

La technique d'appariement peut également trouver un cadre d'application intéressant dans le domaine de l'analyse de réunions d'avancement de travaux : un chef de projet peut définir la liste des tags qui permettent au mieux d'indexer les informations liées à son projet et ainsi d'indexer, dans un même référentiel, les documents produits dans son projet et les réunions associées. L'avantage de cette technique d'appariement est de proposer une indexation précise sans qu'aucun apprentissage ne soit nécessaire pour obtenir une indexation fiable et précise, qui est de fait peu coûteuse.

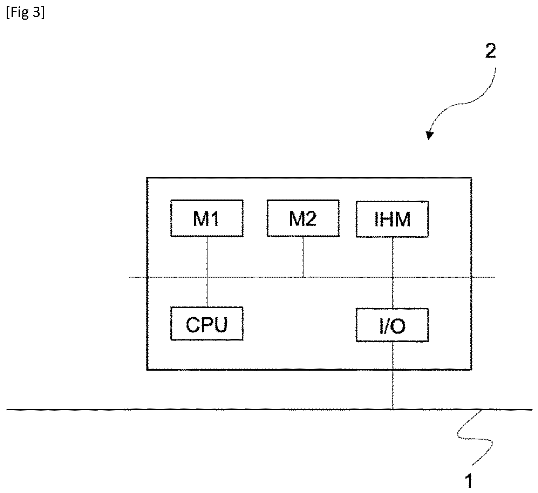

On présente désormais, en relation avec la figure 3, la structure matérielle d'un moteur d'appariement 2 selon un mode de réalisation de l'invention.

Un tel moteur d'appariement 2 comprend une mémoire vive M1 (par exemple une mémoire RAM), une unité de traitement CPU équipée par exemple d'un processeur, et pilotée par un programme d'ordinateur, représentatif d'une unité de calcul de distances entre vecteurs et de scores d'appariement, stocké dans une mémoire morte M2 (par exemple une mémoire ROM ou un disque dur). A l'initialisation, les instructions de code du programme d'ordinateur sont par exemple chargées dans la mémoire vive M1 avant d'être exécutées par le processeur de l'unité de traitement CPU. La mémoire vive M1 contient notamment le vecteur W des éléments représentatifs de l'ensemble à évaluer et extraits de ce dernier, et le vecteur Θ représentatif de la liste de référence, décrits ci-avant en relation avec les figures 1 et 2. Le processeur de l'unité de traitement CPU pilote le calcul des différentes distances entre vecteurs et coefficients de centralité B1, B2 et B3, le calcul des différents scores d'appariement qui en découlent (Score 1, Score 2 et score global), ainsi que la construction de la liste ordonnée d'entrées de la liste de référence les plus pertinentes pour l'ensemble à évaluer, et éventuellement son affichage sur une unité d'interface utilisateur IHM.

Le moteur d'appariement 2 comprend par ailleurs une unité d'entrée/sortie I/O reliée à un bus de communication référencé 1, par laquelle il reçoit par exemple le vecteur W des éléments représentatifs de l'ensemble à évaluer, en provenance d'un module d'extraction non représenté. En variante, un tel module d'extraction d'éléments représentatifs de l'ensemble à évaluer, qui est configuré pour construire le vecteur W, peut être intégré au moteur d'appariement 2.

La mémoire vive M1 est par ailleurs configurée pour stocker en association l'ensemble à évaluer et les entrées de la liste de référence les plus pertinentes vis-à-vis de cet ensemble : par exemple, les Q premières entrées de la liste ordonnée présentant un score d'appariement supérieur à un score d'appariement déterminé, où Q est un entier naturel. Dans un mode de réalisation où l'ensemble à évaluer est un document multimédia, la mémoire vive M1 mémorise par exemple en association le document multimédia (par exemple une vidéo ou une conversation téléphonique) et les Qtags du thesaurus les plus pertinents pour indexer le document multimédia. On peut choisir de conserver les Qtags présentant les scores d'appariement les plus élevés de la liste ordonnée, et/ou de ne conserver que les Q tags présentant un score d'appariement supérieur à un seuil de score d'appariement déterminé.

Le terme unité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions.

La figure 3 illustre seulement une manière particulière, parmi plusieurs possibles, de réaliser le moteur d'appariement 2, afin qu'il effectue les étapes du procédé détaillé ci-dessus, en relation avec les figures 1 et 2 (dans l'un quelconque des différents modes de réalisation, ou dans une combinaison de ces modes de réalisation). En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le moteur d'appariement 2 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé d'appariement d'un ensemble à évaluer (DOC) et d'une liste de référence (LIST), ladite liste de référence étant associée à un vecteur de référence (Θ) représentatif des entrées de ladite liste, **caractérisé en ce qu'**il comprend :

   - un calcul d'une distance (B2) entre ledit vecteur de référence (Θ) et un vecteur (W), associé audit ensemble à évaluer, représentatif d'éléments contenus dans ledit ensemble à évaluer, lesdits éléments comprenant des chaînes de caractères et des groupes de chaînes de caractères ;

- pour chaque entrée de ladite liste de référence, un calcul (14, 17) d'un premier score d'appariement (Score 1) dudit ensemble à évaluer et de ladite entrée de ladite liste de référence, à partir de la distance calculée entre ledit vecteur de référence et ledit vecteur associé audit ensemble à évaluer ;
- une fourniture d'une liste d'entrées de ladite liste de référence, ordonnée en fonction desdits premiers scores d'appariement calculés.

**2.** Procédé d'appariement selon la revendication 1,
**caractérisé en ce qu'**il comprend également, pour au moins un élément contenu dans ledit ensemble à évaluer, un calcul (B1) d'un coefficient de centralité dudit élément, sous forme d'une somme de valeurs de distance entre ledit élément et les autres éléments dudit vecteur associé audit ensemble à évaluer, pondérées par un nombre d'occurrences desdits autres éléments dans ledit ensemble à évaluer.

**3.** Procédé d'appariement selon les revendications 1 et 2, **caractérisé en ce que,** pour chaque entrée de ladite liste de référence, ledit premier score d'appariement (Score 1) est calculé (14) sous forme d'une somme pondérée tenant compte de la distance (B2) calculée entre ledit vecteur de référence et ledit vecteur associé audit ensemble à évaluer et dudit coefficient de centralité (B1) dudit au moins un élément.

**4.** Procédé d'appariement selon l'une quelconque des revendications 1 à 3, **caractérisé en ce qu'**il comprend également un calcul d'une distance (B3) entre ledit vecteur associé audit ensemble à évaluer et un vecteur représentatif de constituants desdites entrées de ladite liste de référence.

**5.** Procédé d'appariement selon les revendications 2 et 4, **caractérisé en ce qu'**il comprend :

- pour chaque constituant desdites entrées de ladite liste de référence, un calcul d'un coefficient d'appariement dudit constituant, sous forme d'une somme pondérée tenant compte de la distance calculée entre ledit vecteur associé audit ensemble à évaluer et ledit vecteur représentatif de constituants desdites entrées de ladite liste de référence, et dudit coefficient de centralité (B1) dudit au moins un élément ;
- pour au moins une entrée de ladite liste de référence, un calcul (15) d'un second score (Score 2) d'appariement dudit ensemble à évaluer et de ladite entrée de ladite liste de référence, à partir des coefficients d'appariement calculés pour lesdits constituants de ladite entrée.

**6.** Procédé d'appariement selon les revendications 1 et 5, **caractérisé en ce qu'**il comprend encore, pour au moins certaines entrées de ladite liste de référence, un calcul (17) d'un score global d'appariement par combinaison linéaire du premier et du second scores d'appariement, **et en ce que,** dans ladite liste ordonnée d'entrées de ladite liste de référence, lesdites entrées sont triées selon ledit score global calculé.

**7.** Procédé d'appariement selon l'une quelconque des revendications 1 à 6, **caractérisé en ce qu'**un nombre d'entrées de ladite liste de référence fournies dans ladite liste ordonnée tient compte d'un paramètre appartenant au groupe comprenant :

- un volume dudit ensemble à évaluer ;
- une valeur desdits scores globaux calculés pour lesdites entrées.

**8.** Procédé d'appariement selon l'une quelconque des revendications 1 à 7, **caractérisé en ce que** au moins certaines desdites distances entre vecteurs calculées tiennent compte d'une similarité sémantique entre éléments et/ou entrées desdits vecteurs.

**9.** Produit programme d'ordinateur comprenant des instructions de code de programme pour la mise en oeuvre d'un procédé d'appariement selon l'une quelconque des revendications 1 à 8, lorsqu'il est exécuté par un processeur.

**10.** Moteur d'appariement d'un ensemble à évaluer et d'une liste de référence, ladite liste de référence étant associée à un vecteur de référence représentatif des entrées de ladite liste,
**caractérisé en ce qu'**il comprend un processeur (CPU) configuré pour exécuter :

- un calcul d'une distance (B2) entre ledit vecteur de référence et un vecteur, associé audit ensemble à évaluer, représentatif d'éléments contenus dans ledit ensemble à évaluer, lesdits éléments comprenant des chaînes de caractères et des groupes de chaînes de caractères ;
- pour chaque entrée de ladite liste de référence, un calcul d'un premier score d'appariement (Score 1) dudit ensemble à évaluer et de ladite entrée de ladite liste de référence, à partir de la distance calculée entre ledit vecteur de référence et ledit vecteur associé audit ensemble à évaluer ;
- une fourniture d'une liste d'entrées de ladite liste de référence ordonnée en fonction desdits premiers scores d'appariement calculés.

**11.** Moteur d'appariement selon la revendication 10, **caractérisé en ce qu'**il comprend une interface utilisateur (IHM) et un module de restitution de ladite liste ordonnée d'entrées sur ladite interface utilisateur.

**12.** Moteur d'appariement selon la revendication 10 ou 11, **caractérisé en ce qu'**il comprend une mémoire (M1) configurée pour stocker en association ledit ensemble à évaluer et Q. premières entrées de ladite liste ordonnée présentant un premier score d'appariement supérieur à un score d'appariement déterminé, où Q est un entier naturel.

**13.** Moteur d'appariement selon l'une quelconque des revendications 10 à 12, **caractérisé en ce que** ledit processeur est également configuré pour exécuter les étapes du procédé d'appariement selon l'une quelconque des revendications 2 à 8.

[Fig 1]

$$\sum c_k \, DIST(W, \Theta)$$

LIST(ENTR,SCORE)

Tags

ENTR3, ENTR7

[Fig 2]

[Fig 3]

Europäisches
Patentamt

European
Patent Office

Office européen
des brevets

# RAPPORT DE RECHERCHE EUROPEENNE

Numéro de la demande

EP 23 18 1960

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2002/152051 A1 (FUKUSHIGE YOSHIO [JP] ET AL) 17 octobre 2002 (2002-10-17)<br>* abrégé *<br>* alinéa [0002] – alinéa [0005] *<br>* alinéa [0011] – alinéa [0013] *<br>* alinéa [0022] *<br>* alinéa [0028] – alinéa [0029] *<br>* alinéa [0207] *<br>* alinéa [0234] – alinéa [0236] *<br>* alinéa [0241] – alinéa [0245] *<br>* revendication 2 *<br>----- | 1-13 | INV.<br>G06F16/34<br>G06F40/247<br>G06F40/30<br>G06F40/216 |
| X | US 2015/088910 A1 (MISRA JANARDAN [IN] ET AL) 26 mars 2015 (2015-03-26)<br>* abrégé *<br>* alinéa [0003] – alinéa [0004] *<br>* alinéa [0017] – alinéa [0021] *<br>* alinéa [0005] – alinéa [0038] *<br>* alinéa [0047] – alinéa [0053] *<br>* alinéa [0065] *<br>* alinéa [0083] – alinéa [0091] *<br>* alinéa [0100] – alinéa [0102] *<br>* alinéa [0135] – alinéa [0136] *<br>----- | 1-13 | |

**DOMAINES TECHNIQUES RECHERCHES (IPC)**

G06F

Le présent rapport a été établi pour toutes les revendications

| Lieu de la recherche | Date d'achèvement de la recherche | Examinateur |
|---|---|---|
| La Haye | 6 octobre 2023 | Boyadzhiev, Yavor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 18 1960

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-10-2023

| Document brevet cité au rapport de recherche | Date de publication | Membre(s) de la famille de brevet(s) | Date de publication |
|---|---|---|---|
| US 2002152051 A1 | 17-10-2002 | CN 1363899 A | 14-08-2002 |
| | | JP 3701197 B2 | 28-09-2005 |
| | | JP 2002202983 A | 19-07-2002 |
| | | US 2002152051 A1 | 17-10-2002 |
| US 2015088910 A1 | 26-03-2015 | AUCUN | |

Pour tout renseignement concernant cette annexe : voir Journal Officiel de l'Office européen des brevets, No.12/82

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3041125 A1

**Littérature non-brevet citée dans la description**

- **CHARLET D. ; DAMNATI G.** Simbow at semeval-2017 task 3: Soft-cosine semantic similarity between questions for community question answering. *Proceedings of the 11th International Workshop on Semantic Evaluation (SemEval-2017),* Août 2017, 315-319

- **REIMERS ; NILS ; IRYNA GUREVYCH.** Sentence-BERT: Sentence Embeddings using Siamese BERT-Networks. *Proceedings of the 2019 Conférence on Empirical Methods in Natural Language Processing and the 9th International Joint Conference on Natural Language Processing (EMNLP-IJC-NLP),* 2019
- **BOUKHARI K. ; OMRI M. N.** pproximate matching-based unsupervised document indexing approach: application to biomedical domain. *Scientometrics,* 2020, vol. 124 (2), 903-924